Europäisches Patentamt

European Patent Office

Office européen des brevets

(19)

(11) Publication number : **0 508 972 A1**

# EUROPEAN PATENT APPLICATION

(12)

(21) Application number : 92850081.8

(22) Date of filing : 10.04.92

(51) Int. Cl.⁵ : **A47J 45/06, B25G 3/14**

(30) Priority : **11.04.91 NO 911404**

(43) Date of publication of application :
**14.10.92 Bulletin 92/42**

(84) Designated Contracting States :
**BE DE FR GB IT LU NL SE**

(71) Applicant : **HACKMAN HOUSEWARES OY AB**
**Post Box 130**
**SF-00511 Helsinki (FI)**

(72) Inventor : **Eide, Svein**
**c/o Hoyang Polaris a.s., Post Box 160**
**N-4301 Sandnes (NO)**

(74) Representative : **Ström, Tore et al**
**Ström & Gulliksson AB Studentgatan 1 P.O.**
**Box 4188**
**S-203 13 Malmö (SE)**

(54) **Handle with attachment means.**

(57) A handle (1), particularly for cooking uten-
siles (11), is mounted by pressing said handle
(1) onto a fitting (7) or a load supporting bolt.
Those surface which after mounting constitute
a mutual locking engagement consist of a plas-
tic (2,9) provided with grooves forming hooks
and counter hooks. The grooved plastic is at-
tached to metal fittings (7).

The handle (1) may be arranged such that it
becomes more firmly attached when traction in
said handle increases.

FIG. 1

The present invention relates to a handle with attachment means, particularly for cooking utensils and cans, said handle being of the type which may be mounted automatically by being pressed onto a bolt or a fitting which beforehand has been attached to the cooking utensil.

The invention also relates to a method for attaching a handle to a cooking or other utensil.

Several known embodiments of this type of handle are described e.g. in the publications: EP-A1 0205665, DE-2264244-B, DE-3729908-A, DE-3407503-A, DE-3204641-A, DE-3009766-A, DE-2729726-A, DE-2729269, US-4019221-A.

All those solutions have their functional limitations. For instance, when using a too small pressure force during mounting it may happen that the handle seems to be correctly mounted whereas in fact it has not reached locking position. This may result in that the handle falls off. The same may be the result if the end casing (flame protection) is too long or is poorly adapted to the wall of the cooking utensil.

None of the solutions mentioned above satisfies the strength requirements according to British Standard No 6743.4,4.

The use of steel springs in connection with bakelite handles involves the disadvantage that a high local pressure will arise in those points in which the spring bears against the bakelite. This will limit the strength of the spring.

Steel springs subject to constant strain may be weakened. They are also subject to corrosion.

One object of the present invention is to provide a handle for fast mounting in which said disadvantages have been avoided and which is sensible and simple from manufacturing point of view.

This object is obtained by providing a handle with attachment means which partly consist of metal and partly of elasctic plastic. The metal portion will carry part of the supporting load and the plastic portions provide a locking engagement.

The assembly is carried out by pressing the handle onto the fitting or the bolt so that any end casing that may be fitted on the handle abuts the wall of the cooking utensil. It is possible to use different lengths of the end casing for the same type of handle and for the same attachment means.

Those surfaces, which after mounting provide a locking engagement, consist of plastic and are provided with sharp, tooth-shaped grooves.

Both main portions, handle and fitting, may be provided with engagement surfaces of the same type of plastic or with different types of plastic. The grooves of the handle may consist e.g. of bakelite grooves, and the grooves on the fitting may be made of a thermoplastic material. Said grooves form hooks and counterhooks.

It is implied that at least one of the parts is provided with engagement surfaces of plastic which at the moment of attachment have a certain elasticity.

It is preferred to use a thermoplastic having good temperature resistance and good aging properties. Exemples of such plastics are: siloxane, polybenzimidazole, polyimide, polyamide-imide, polyarylsulphone, polyamide etc. Thermosetting resins with some elasticity may also be used, e.g. certain types of polyester.

The preferred plastic for the engagement surfaces should resist tension load of 1-2 kg for each groove when the width is 10 mm, the distance between the grooves 1 mm and the groove depth 0,5 mm. The material shall have a breaking strength of 400 kg/cm$^2$ or more at 200°C.

The number of grooves which after attachment are in mutual engagement can be subject to variations in dependence of the demands. The spacing between the grooves and the groove depth may be subject to variations in dependence of the quality of the plastic. A plastic material with low elasticity may e.g. be provided with comparatively fine grooves.

The requirement with respect to fit between the wall of the cooking utensil and the end casing or the flame protecting means may be complied with by providing the groove pattern on e.g. the fitting with interruptions with recesses so as to form groups of zones having grooved surfaces. During relative displacement of one zone with respect to another zone, it is possible to obtain, after mounting, full engagement in one group and partial engagement in another group of grooves. A groove spacing of e.g. 1 mm may then result in locking engagement during displacement inwards e.g. for each 1/2 mm. The procedure is convenient when the inlay is attached by moulding.

Another way of obtaining fine adjustment of the fit-up is to adjust the length of the plastic inlay of the handle. This method is well suited when said inlay is loosely mounted and held in position by means of a nut in the outer portion of the handle, or by means of a plug providing a wedging action.

The handle may be provided with grooves in the transition section of the end casing so that the latter can remain firmly positioned in various insertion positions and various abutments.

The handle may be made of plastics, ceramics, glass or metal.

When the engagement plastic is loosely attached, it may be held in position by being pressed against an outer stop edge and against the inner portion of the fitting and of the opening in the handle, respectively.

The stop edge of the handle may form part of the handle itself or it may be inserted after locating the engagement plastic. It may consist of a plug, a locking ring, a nut etc.

The preferred embodiment of the fastening means according to the invention includes a bolt with a lining of grooved plastic. The bolt is attached by welding to a U-shaped fitting which in turn is attached to the cooking utensil.

The bolt may be provided with a head at the outermost position thereof which keeps the lining in place. The bolt may also be provided with threads, and in that case said lining must be threaded internally. If a threaded bolt is being used, said head may be deleted. In that case the extension length of the plastic lining may be longer than the bolt.

The engagement plastic of the corresponding handle consists of an insert tube with concentric, equally spaced internal grooves. The tube is preferably divided in the longitudinal direction by means of a slot opening. The slot allows for expansion and diameter reduction. This is an advantage i.a. during production. Covering and internal lining may both be provided with longitudinal grooves in order to increase the elasticity and improve the engagement (splines).

One feature according to the invention is that it may be arranged so that the holding grip of the handle increases when the handle is subject to increased traction force. The locking force of parts of the handle may be subject to a proportional increase when traction force increases.

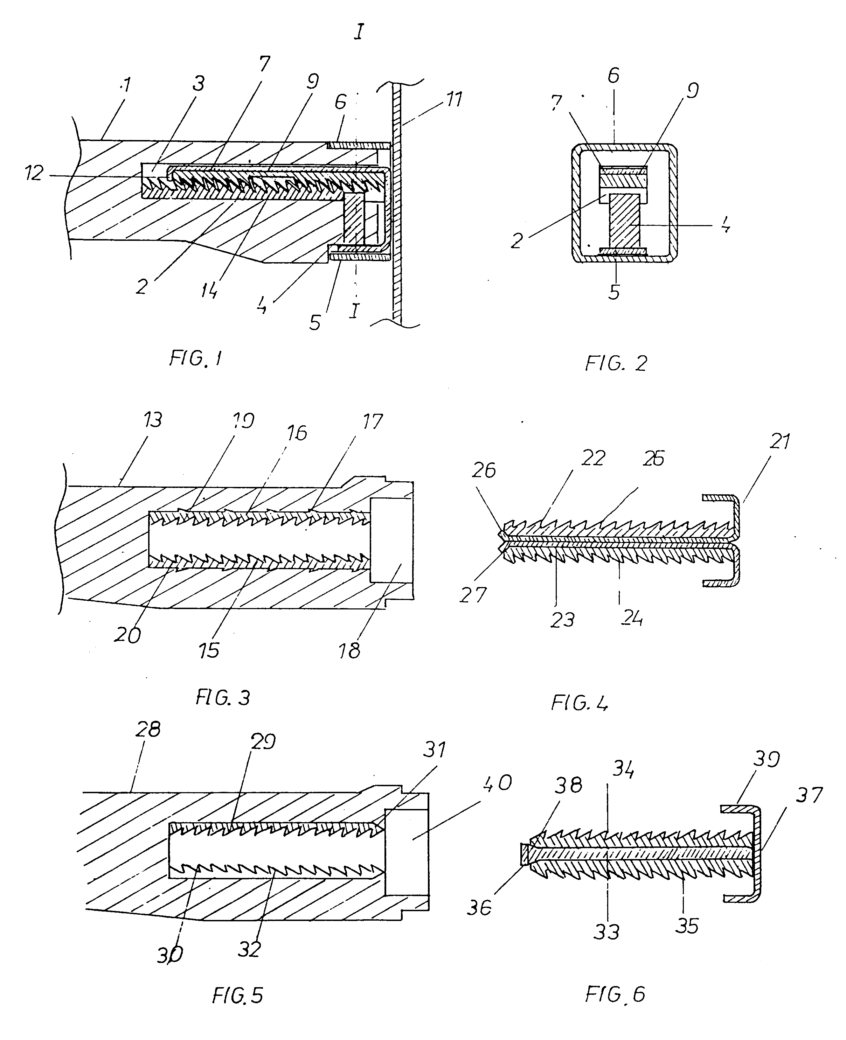

This is obtained when the stop edge of the outer portion of the recess in the handle and the head of the bolt form sloping planes directed inwardly respectively outwardly. When the insert tube is loosely attached by moulding and said insert tube is provided with a longitudinal slot opening, a wedging action will also be obtained. A resulting force perpendicularly to the traction direction will increase the contact pressure on the sloping plane of the stop edge. The lining at the bolt head will expand and increase the contact pressure at the inner portion of said tube. This principle is illustrated in figures 5 and 6.

Another feature is that the contact surface pressure also may be increased in proportion to the compression force.

This is obtained by forming the bolt, the lining and the insert tube/fitting conical, e.g. 1°. When the sloping plane of the bolt head at the same time is e.g. 30°, the special resulting effect is that the contact pressure increases when the handle is pressed inwardly as well as when it is made subject of traction.

Another advantage related to the present invention is that it provides a safe attachment also in case it should not be pressed totally inwardly.

Fittings and bolts may be formed so that they participate in supporting the main part of the load. This may be of importance for the construction and design of the handle. This may i.a. make the handle more safe in case of possible rupture.

The recess of a plastic handle may be completely filled up by bolt, fittings and engagement plastics. This involves the advantage that accumulation of dirt may be avoided at the same time as the strength increases.

If the handle consists of e.g. bakelite filled up with mineral or with ceramic material, the contact pressure will increase when temperature increases due to the fact that the thermo plastic has a considerably greater thermal expansion.

The attaching method is also well suited for glueing. This may be of interest when the engagement area has been chosen very small.

The same attachment may be used for hand grips and side handles. The principle renders possible i.a. a yoke design, i.e. no transversal connection with the cooking utensil.

It is an object of the invention to provide an impact absorbing attachment. This is of essential importance in such cases where the handles are made of glass or ceramic material.

The invention will be discribed below with reference to the drawings. The grooves are shown in enlarged scale.

Fig 1 shows a longitudinal section of a part of a handle mounted onto the wall of a cooking utensil.

Fig 2 shows a transversal section of the handle according to fig 1.

Fig 3 shows a handle with two inlays which are firmly moulded into the handle.

Fig 4 shows a double fitting having two groove plates which are loosely attached.

Fig 5 shows a plastic handle having a cylindrical recess and an outer square recess. A tube with internal grooves is moulded into the cylindrical recess.

Fig 6 shows a section through a fitting including a welded bolt and a lining of grooved plastic.

In fig 1 the bakelite handle 1 with the end casing 6 of stainless steel is mounted to the cooking utensile 11. The handle is provided with a recess 3 which makes room for a grooved plastic inlay 2 which is held in position by the plug 4. The groove pattern is interrupted by a recess 14. A fitting 7 is attached to the wall of the cooking utensile 11 and a plastic inlay 9 is attached to the fitting, said inlay comprising grooves forming counter hooks to the grooves of the inlay 2. The plastic inlay 9 is held in position by the stop edge 12. The plug 4 is locked by the angled fitting 5.

As mentioned fig 2 shows a cross section of the handle in its mounted condition as shown in fig 1, through I-I.

Fig 3 discloses a longitudinal section of a bakelite handle 13 having a rectangularly formed recess 17 and two inlays 15, 16 provided with grooves 19, 20. The inlays 15, 16 are firmly moulded into the handle 13 and are locked by means of external nibs 17.

Fig 4 discloses a fitting 21 having two inlays 22, 23 provided with grooves 24, 25, which form counter hooks for the grooves 19, 20 in the handle 13. The stop edges of the fitting form sloping planes 26, 27.

Fig 5 discloses a longitudinal section of a plastic handle 28 with a tube of a suitable thermoplastic 29 moulded into said handle. The inlay tube has internal grooves 30. It is divided longitudinally by a slot opening 32, and in the outer edge thereof it forms a sloping plane 31 towards the plastic in the handle 28. A recess 40 having a square form prevents the turning round of the handle 28 after mounting.

Fig 6 shows a longitudinal section of a bolt of stainless steel 33 which by welding is attached to a fitting 37 having flanges 39 which fit into the recess 40 of the handle 28. On the outside the bolt 33 is provided with a thermoplastic covering 34 with grooves 35. The bolt 33 has a conical head 36 and the covering sloping surfaces 38 towards the head 36.

The invention also realates to a method for attaching a handle to a cooking or other utensil of the type having a recess in the shaft thereof and a fitting or a bolt attached to said utensil, and which may be fitted into locking position by pressing the corresponding fitting/bolt etc into said shaft recess. According to the invention an inlet/a tube 7, 21, 37, 33 is firmly attached or displacably attached in the longitudinal direction to the fitting /the bolt 7, 21, 33, said inlet/tube being provided with counterhooks/grooves 24, 25, 35 on the outside thereof, and which may be provided with a stop edge/a conical head at the extreme end thereof, for forming a sloping plane 26, 27, 36 so that said inlet/tube 7, 21, 37, 33 will slide along said sloping plane 26, 27, 36 when being displaced outwardly with respect to said fitting/bolt 7, 21, 33 thus giving raise to a resultant to force. The inner wall of said shaft recess 3, 17 is completely or partly covered by grooves/hooks 19, 20, 30 which are shaped so as to create a locking engagement with the grooves/the hooks of the fitting/the tube 24, 25, 35 when said portions being pressed together.

In accordance with the invention said grooves 19, 20, 30 on the inner side of the shaft recess 3, 17 are formed into one or several inlets/tubes 2, 15, 16, 29 of plastic which are firmly moulded into the handle.

Further, in accordance with the invention, the grooves 19, 20, 30 on the inner side of the shaft recess 3, 17 are formed into one or several inlets/tubes 2, 15, 16, 29 of plastic which is loosely cast into or mounted into said handle, so that some displacement outwardly with respect to the handle in the longitudinal direction thereof is made possible.

According to the invention the handle recess 17 forms a sloping plane 31 at the extreme end of said inlet/tube 29, 19, 20.

Further, according to the invention, the tube 29 is divided in the longitudinal direction by means of a slot 32.

Finally, according to the invention, the handle recess 3, 17 is conical and the fitting/bolt 7, 21, 33 with inlet/tube 7, 21, 37, 33 is formed with the same conicity.

## Claims

1. Handle and attachment means for cooking utensiles etc, of the type which may be firmly attached by the yielding effect obtained from a resilient device when the handle is pressed against a fitting or a bolt which on beforehand has been attached to the wall of the cooking utensile, **characterized** in that the resilient materials (2, 9, 15, 16, 22, 23) which in mounted position create a locking engagement, consist of plastic material having tooth-shaped grooves, suitably with hook and counter hook profiles (19, 20, 30, 35), and that the grooved plastic which is attached to the cooking utensile (9, 22, 23, 34) is attached to a fitting (7, 21) or to a bolt (33) of metal.

2. Handle and attachment means as claimed in claim 1, **characterized** in that hooks (19, 20, 32) and counter hooks (22, 24, 35) consist of different types of plastic.

3. Handle as claimed in claims 1, 2, **characterized** in that the fittings (7, 21) have stop edges (12, 26, 27) holding the grooved plastic (9, 22, 23) and in that the stop edges may form sloping planes (38, 31).

4. Handle and attachment means as claimed in claims 1, 2, **characterized** in that the bolt (33) has a conical head (36).

5. Handle and attachment means as claimed in claims 1, 2, 4, **characterized** in that the lining of the tube (34, 29) is provided with longitudinal grooves (splines).

6. Handle and attachment means as claimed in claims 1, 2, 4, 5, **characterized** in that the grooved engagement plastic of the handle (28) consists of a tube (29) provided with continuous grooves along its entire length (32).

7. Handle and attachment means as claimed in claim 6, **characterized** in that the tube (29) forms a sloping plane (31) at the outer end thereof.

8. Handle and attachment means as claimed in claims 1-7, **characterized** in that the grooved plastic (2, 9, 15, 16, 22, 23, 29, 34) is provided with one or several recesses (14) interrupting the groove pattern.

9. Handle and attachment means as claimed in claim 8, **characterized** in that when the grooves begin again after an interruption (14), the toothing is displaced so as to form only a partial engagement with corresponding engaging grooved plastic (2).

10. Handle and attachment means as claimed in claims 1.-9, **characterized** in that the grooved plastic (9, 22, 23, 34) is conical or decreases in thickness from the wall of the cooking utensile and outwardly, and in that corresponding grooved plastic of the handle is adapted to this so that the recess/the hole becomes narrower in a direction inwards.

FIG. 1

FIG. 2

FIG. 3

FIG. 4

FIG.5

FIG. 6

EP 0 508 972 A1

## European Patent Office

## EUROPEAN SEARCH REPORT

Application Number

EP 92 85 0081

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-8 300 424 (ROBERT KRUPS STIFTUNG & CO.KG.)<br>* page 7, line 28 - page 8, line 11; figures 3,4 * | 1,2 | A47J45/06<br>B25G3/14 |
| A | CH-A-440 174 (G. SCHWARTZ & CO.)<br>* column 1, line 32 - column 2, line 12; figures 1,2 * | 1 | |
| A | US-A-2 497 384 (J.L. YOUNG)<br>* column 2, line 17 - column 3, line 12; figures 1-6 * | 1,8 | |
| A | GB-A-256 118 (R.T. SHELLEY LTD.)<br>* page 2, line 56 - line 84; figures 1,3,6 * | 4 | |
| A | FR-A-1 327 199 (C. OUDET)<br>* page 1, right column, line 18 - page 2, left column, line 28; figures 1,3,4 * | 5,6,10 | |
| A | GB-A-2 145 767 (INTERTECHNIQUE S.A.) | | |
| A | US-A-1 798 002 (G.W. SILBAUGH) | | TECHNICAL FIELDS SEARCHED (Int. Cl.5 ) |
| A | GB-A-2 183 196 (HEALEY MOULDINGS LTD.) | | A47J |
| A | AU-B-417 138 (STRONG-LITE ALUMINIUM INDUSTRIES PTY.) | | B25G<br>F16B |
| D,A | EP-A-0 205 665 (HEINRICH BAUMGARTEN KG SPEZIALFABRIK FÜR BESCHLAGTEILE) | | |

The present search report has been drawn up for all claims

| Place of search | Date of completion of the search | Examiner |
|---|---|---|
| THE HAGUE | 31 JULY 1992 | J. SCHMITT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7